# EUROPÄISCHE PATENTSCHRIFT

(11) **EP 1 869 740 B1**
(45) Veröffentlichungstag und Bekanntmachung des Hinweises auf die Patenterteilung: **16.07.2014**
(21) Anmeldenummer: 05743192.6
(22) Anmeldetag: 25.05.2005
(51) Int. Cl.: H02G 3/04

(54) **KABELKANAL**
CABLE DUCT
PASSAGE DE CABLES

(30) Priorität: 15.04.2005 AT 6412005
(43) Veröffentlichungstag der Anmeldung: 26.12.2007
(73) Patentinhaber: CableRunner Austria GmbH & Co. KG, 1230 Wien (AT)
(72) Erfinder: REISS, Gerhard, A-2361 Laxenburg (AT); KADRNOSKA, Helmut, A-1220 Wien (AT)
(74) Vertreter: Wildhack & Jellinek
(86) Internationale Anmeldenummer: PCT/AT2005/000180
(87) Internationale Veröffentlichungsnummer: WO 2006/108199

(56) Entgegenhaltungen:
- US-A- 4 104 871
- US-A- 6 107 565
- US-A1- 2002 108 365

## Beschreibung

Die vorliegende Erfindung betrifft einen neuen Kabelkanal für entlang von Wänden, Wandungen und insbesondere Decken von unterirdisch, im Wesentlichen horizontal, schräg ansteigend oder abfallend und/oder kurvig bzw. mit Krümmungen verlaufenden, vorzugsweise für die Führung von Wasser oder Abwässern vorgesehenen bzw. benutzten, Rohren, Gewölben, Tunnels, Kanälen, Schächten od. dgl., zu verlegende Kabel bzw. Kabelstränge für Energie- und Stromtransport, Telefonie, Daten- und Informationstransfer u. dgl., insbesondere für Glasfaser- und Lichtleiter-Kabel bzw. -Kabelstränge, wobei der neue Kabelkanal von der Oberfläche aus jeweils durch im Wesentlichen vertikale oder schräge Zugangs- bzw. Zweigschächte in das genannte Rohr, Gewölbe u. dgl. einbringbar bzw. einziehbar und an dessen Wand, Wandung und insbesondere Decke befestigbar ist.

Die hohen Wachstumsraten auf dem Gebiet der Informationstechnologie und Telekommunikation, aber auch der immer noch steigende Energiebedarf hat in den letzten Jahren einen großzügigen Ausbau der Systeme von Übertragungsleitungen und - kabeln der verschiedensten Art und deren gegenseitige Vernetzung nötig gemacht

Selbst in Gebieten mit geringer Verbauung erfolgt die Verlegung der für die genannten Zwecke vorgesehenen Leitungen oder Kabel in hohem Maße nicht mehr über z. B. witterungsbedingt störanfällige Freileitungen in der Landschaft, sondern, wenn irgend möglich, unter der Bodenoberfläche, wobei die dafür nötigen Aufgrabungsarbeiten zwar relativ aufwändig sind, aber im Wesentlichen nicht durch andere Infrastruktureinrichtungen, Gebäude, Bodeneinbauten od. dgl. gestört werden.

Wesentlich schwieriger war und ist die Verlegung derartiger Leitungen unter der Oberfläche in städtischen Ballungsgebieten, wobei hiezu nur der Aspekt der Verkehrsbehinderung als wesentlicher Nachteil erwähnt sei.

Im Zuge des Aufbaus von Leitungssystemen und Datennetzen mit hohen Übertragungsdichten und -raten bieten Lichtleiter- bzw. Glasfaserkabel ganz wesentliche Vorteile, und es ist schon vor längerer Zeit begonnen worden, die für deren Verlegung notwendigen Aufgrabungs- und Bauarbeiten möglichst zu vermeiden, indem man sich für die Verlegung derartiger Spezial-Leitungen und -Kabel einer schon vorhandenen unterirdischen Infrastruktur von Versorgungs- und Entsorgungsnetzen, insbesondere z. B. der Abwasser-Kanalnetze in Siedlungsgebieten, Städten u. dgl. bedient. In verschiedenen Großstädten werden heute nicht nur Datenübertragungs-, Steuerungs- und Informationsträger-Kabel, sondern auch beispielsweise Starkstromkabel im unterirdischen Kanalnetz, in derartigen schon vorhandenen Stollensystemen u. dgl. verlegt.

Der große Vorteil dieser Art der Verlegung besteht darin, dass ein Öffnen des Bodens - mit der dabei unvermeidlichen Zerstörung von Verkehrsflächen, Pflasterungen und mit den dadurch verursachten wesentlichen Beeinträchtigungen des Verkehrs von Menschen und Fahrzeugen - für das Legen bzw. Verlegen eines Kabels bzw. Kabelstrangs mit allen diesen unangenehmen Konsequenzen nicht mehr notwendig ist, was wesentliche Kosteneinsparungen bei durchaus hoher Flexibilität hinsichtlich der Verlegestrecke bringt.

Eine wesentliche Forderung bleibt dabei selbstverständlich weiter bestehen, nämlich jene, dass auch die Verlegung in den unterirdischen Ver- und Entsorgungssystemen einen möglichst geringen Aufwand erfordern soll, und dass ein rasches und effektives Verlegen der Kabel, Leitungen u. dgl. unter den an sich erschwerten, in Kanalnetzen herrschenden Bedingungen ermöglicht ist.

Eine ältere Technik der Verlegung von Kabeln und Kabelsträngen in Kanälen u. dgl. bestand im Wesentlichen darin, dass an den Wänden des Kanals od, dgl. in relativ geringen Abständen voneinander jeweils Kabelhalter mit etwa schalen- bzw. rinnenförmigen Aufnahmen für die Halterung bzw. Klemm-Halterung der zu verlegenden Kabel montiert werden und auf diese Kabelhalter die Kabel beidseitig seitlich und nach vorne hin abdeckende Kabelabdeckplatten, -hauben od. dgl. aus relativ rigiden Materialien, wie insbesondere Kunststoffen, befestigt werden.

In weiterer Folge sind verschiedene Vorschläge für kontinuierlich verlegbare, z. B. von einer Aufwickel-Trommel abspulbare biegeflexible, mit entsprechenden Mehrfach-Rinnen- oder -Hohlprofilen für Aufnahme und Halterung der Kabel ausgebildete Kabelkanäle bekannt geworden.

Die vorliegende Erfindung hat sich die Aufgabe gestellt, eine neue Art von äußerst einfach zusammensetzbaren, hochstabilem Kabelkanal zu schaffen, welcher mit untereinander gleichen Einzel-Modulen gebildet ist, die im Bereich der Einzugöffnung eines zum eigentlichen, für die Kanalverlegung vorgesehenen Kanal führenden Zweigschachtes mit geringem Manipulationsaufwand zu einem praktisch "endlosen" kontinuierlichen Kabelkanal-Strang zusammensetzbar sind, der dann laufend in diesen Kanal einbringbar und dort - vorteilhafter Weise mittels an sich bekannten, automatisch arbeitenden Kabelkanal-Montagewagen - an dessen Decke, Wänden od. dgl. befestigbar ist, sodass dann in den mindestens einen kontinuierlichen, sich längserstreckenden Kabel-Aufnahmeraum in dem Kabelkanal die zu verlegenden Kabel bzw. Kabelstränge einbringbar sind.

In der US-A6107565 ist ein Kabelkanal mit ganz kurzen, gegeneinander verschwenkbaren Gliedelementen beschrieben, welche (Flanken-)Deckbänder aufweisen, die über voneinander beabstandet angeordnete, von den dortigen kompliziert geformten Deckplatten nach innen ragenden, jeweils einen eine rinnenartige Ausnehmung aufweisenden Vorsprung und einen oberhalb dieses Vorsprunges ebenso nach innen ragenden Stift aufweisen, wobei jeweils zwischen diesen beiden einzelnen Formschlussteilen zweier einander zugeordneter Deckplatten ein flexibles Band eingezogen ist, das jedoch in den Streckenabschnitten zwischen den Formschlusselementen bloß stumpfstoßend an den Innenseiten der Gliedelement-Deckplatten anliegt und daher nur einen geringen Schutz gegen das Eindringen von Schmutzteilchen aus einem als Verlegeort benützten (Ab-)Wasserkanal bilden kann.

Ein die mechanische Stabilität der einzelnen Gliedelemente und somit des Kabelkanals gewährleistender, die beiden Deckplatten haltender Mittelsteg ist dort nur als Möglichkeit beschrieben, jedoch fehlt jeglicher näherer Hinweis auf dessen technische Realisation außer einer Bohrung in den Deckplatten für dessen Befestigung.

Der US 2002/0108365 A1 ist ein aus ebenfalls sehr kurzen Gliedelementen gebildeter Kabelführungskanal zu entnehmen, wobei jedes der Gliedelemente einen mit ihm einstückigen mittleren Trennsteg aufweist und wobei die Verschwenksituation der einzelnen kurzen Trennstege der Gliedelemente jedoch nicht näher ersichtlich ist. Ein ganz wesentlicher Nachteil dieses bekannten Kabelkanals besteht darin, dass dort an jede der Deckplatten ein mit einer solchen an der anderen Deckplatte zusammenwirkendes Seitenflankendeckplättchen vorgesehen ist, die mit den Deckplättchen der beidseitig benachbarten Gliedelemente bei geradlinigem Verlauf nur stumpf stoßen, jedoch schon bei leichter Krümmung des Kabelkanals zwischen einander große Lücken ohne jegliche Abdeckung freilassen, durch welche durchaus auch grobe Schmutzteilchen ungehindert in das Innere des Kabelkanals eindringen können, was zu unerwünschten Störungen Anlass gibt.

Gegenstand der vorliegenden Erfindung ist somit ein wie eingangs beschriebener Kabelkanal gemäß dem **Oberbegriff** des **Anspruches** s 1 , welcher die im **kennzeichnenden** Teil dieses **Anspruches** genannten Merkmale aufweist.

Der neue, mit gegeneinander (seitlich) winkel-verschwenkbaren, kettenglied-artig miteinander verbundenen, untereinander identischen Moduleinheiten gebildete Kabelkanal zeichnet sich durch hohe mechanische Stabilität, durchaus ausreichenden Schutz für die innerhalb desselben verlegten Kabel, Leitungen u. dgl. gegenüber Verschmutzung sowie weiters durch einfache und problemlose Einbringbarkeit in ein jeweiliges Kanalsystem aus, was insbesondere eine Folge der schon kurz angesprochenen gegenseitigen Winkel-Verschwenkbarkeit der neuen modulartigen Kabelkanal-Gliedelemente ist. In gewissem Ausmaß ist auch eine Verkrümmung bzw. Biegung in Vertikalrichtung bzw. eine Torsion- bzw. 3D-Verdrehung des neuen, aus den gegenseitig jeweils um ihre Längsachse zumindest etwas verdrehbaren Einzelmodulen zusammengesetzten Kabelkanals ermöglicht. Dies erleichtert einerseits die Anpassung an die im Inneren der Abwasserkanäle herrschenden topografischen Verhältnisse, und andererseits auch das Einbringen des neuen Kabelkanals in die Kanäle über die üblichen vertikalen oder schrägen Zugangs- bzw. Zweigschächte, welche in die eigentlichen Kanäle münden.

Der **Anspruch** 1 offenbart eine der Erfindung entsprechende Ausführungsvariante der miteinander zum Kabelkanal vereinigbaren und letztlich vereinigten modulartigen Kabelkanal-Gliedelemente, die sich durch hohe mechanische Stabilität und weitgehende Abschottung der in demselben verlegten bzw. geführten Kabel gegenüber der Umgebung im Abwasserkanal auszeichnet, wobei die dort beschriebene Ausführungsform der die einzelnen Kabelkanal-Gliedelemente miteinander verbindenden Winkelverschwenk-Mechanismen hoch flexibel ist, und die zwingend vorgesehene Ausbildung der Gliedelement-Module des neuen Kabelkanals, gemäß welcher die einzelnen Kabelkanal-Gliedelemente jeweils mit zwei zueinander identischen, mittels Steckstiften od. dgl. miteinander vereinigbaren Halb-Gliedelementen gebildet sind, eine hohe Gestaltungsflexibilität neben einem äußerst einfachem Zusammenbau der einzelnen Gliedelemente selbst und der aufeinander folgenden, gegeneinander verschwenkbaren Gliedelemente zum Kabelkanal ermöglicht

Der **Anspruch** 2 offenbart eine von der Grundform abweichende "zentrisch-symmetrische" Ausführungsform der neuen zusammengesetzten Kabelkanal-Gliedelemente, wobei im damit gebildeten Kabelkanal z. B. deren obere Deckplatten sozusagen über "Kopf-Schwanz", also über Schwenkfortsatz und Schwenkausnehmung, und deren "untere" Deckplatte über "Schwanz-Kopf", also zur soeben genannten Anordnung diametral bzw. invers, also jeweils über Schwenk-Achsausnehmung und Schwenk-Fortsatz winkel-verschwenkbar miteinander verbunden sind.

Der **Anspruch** 3 betrifft eine besonders einfach durchführbare Montage des neuen Kabelkanals im Inneren eines Abwasserkanals, insbesondere an dessen Decke, z.B. mittels automatischem Kabelkanal-Montagewagen od. dgl. ohne zusätzlich gesonderte Halterungselemente.

Bei einer Ausführungsform der Schwenkachs-Ausnehmungen der Schwenk-Fortsätze der Deckplatten der Kabelkanal-Gliedelemente, z. B. in Form von Langlöchern, wie gemäß **Anspruch** 4 vorgesehen, ist eine relativ hohe bzw. ausreichende "Vertikal-Verbiegbarkeit" bzw. Auf- oder Abwärts-Krümmung des mit den Gliedelementen gebildeten neuen Kabelkanals gewährleistet, was dessen Anpassbarkeit an die jeweilige Abwasserkanal-Innenraum-Topografie gewährleistet.

Weiters sind dem **Anspruch** 5 im Rahmen der Erfindung besonders bevorzugte Werkstoffe für die einzelnen Kabelkanal-Gliedelemente sowie für deren dieselben durchgehend seitlich deckenden, kontinuierlichen Seiten- bzw. Flanken-Deckbänder bzw. -profile zu entnehmen.

Es ist günstig, wenn diese Flanken-Deckbänder aus einem Kunststoffmaterial bestehen, das zwar weniger starr ist, als das die Kabelkanal-Gliedelemente bildende und aus Gründen der Tragfähigkeit und mechanischen Festigkeit grundsätzlich eine relativ geringe Biegeflexibilität aufweisende, also eher rigide Kunststoffmaterial, jedoch keineswegs als "schlaff" bezeichnet werden kann. Die Biegefähigkeit der Flanken-Deckbänder soll so beschaffen sein, dass dieselben die Seit-Krümmungen des Kabelkanals ohne besonderen Widerstand mitvollziehen können, dass aber andererseits die mechanische Stabilität, Festigkeit und Tragfähigkeit sowie Robustheit des Kabelkanals gesichert ist und es nicht zu einer Desintegration von Gliedelemente und Flanken-Deckbändern kommt, Indem sich die Deckbänder z. B. womöglich von den Gliedelementen lösen.

Um die Ausleitung eines oder mehrerer Kabel bzw. Zweigkabel in einen zu einem Hausanschluss od. dgl. führenden, aus dem Kanal herausführenden Zweigschacht od. dgl. zu erleichtern, ist es vorteilhaft, die Flanken-Deckbänder außenseitig mit Kabelhatte-Profilrinnen od. dgl. auszubilden, wie dem **Anspruch** 6 zu entnehmen.

Anhand der Zeichnung wird die Erfindung näher erläutert:
Es zeigen die Fig. 1 zwei miteinander schwenk-verbundene Gliedelemente eines erfindungsgemäßen Kabelkanals, die Fig. 2 ein Kabelkanal-Halb-Gliedelement, welches mit einem zweiten, hier nicht dargestellten, gleichartigen Halb-Gliedelement zu einem gesamten Kabelkanal-Gliedelement gemäß der Erfindung vereinigbar bzw. zusammensteckbar ist, die Fig. 3 zwei jeweils aus mehreren Kabelkanal-Gliedelementen zusammengesetzte Kabelkanal-Tellstücke, die Fig. 3a schematisch ein Detail der Formschluss-Verbindung zwischen den beiden Deckplatten eines Kabelkanal-Gliedelements mit den für deren Seitenabdeckung vorgesehenen kontinuierlichen biegeflexiblen Seiten- bzw. Flankendeckbändern und die Fig. 3b eine Querschnittsansicht eines für die Halterung von Zweig-Kabeln od. dgl. mit außen verlaufenden Kabelhalteprofilrinnen ausgebildeten Flanken-Deckbandes. Die Fig. 4 illustriert einen Kabelkanal gemäß der Erfindung mit den ihn beidseitig schließenden Flanken-Deckbändem näher, und die Fig. 6 zeigt eine weitere vorteilhafte Ausführungsform des neuen Kabelkanals mit "zentrisch symmetrischem" Kabelkanal-Gliedelement.

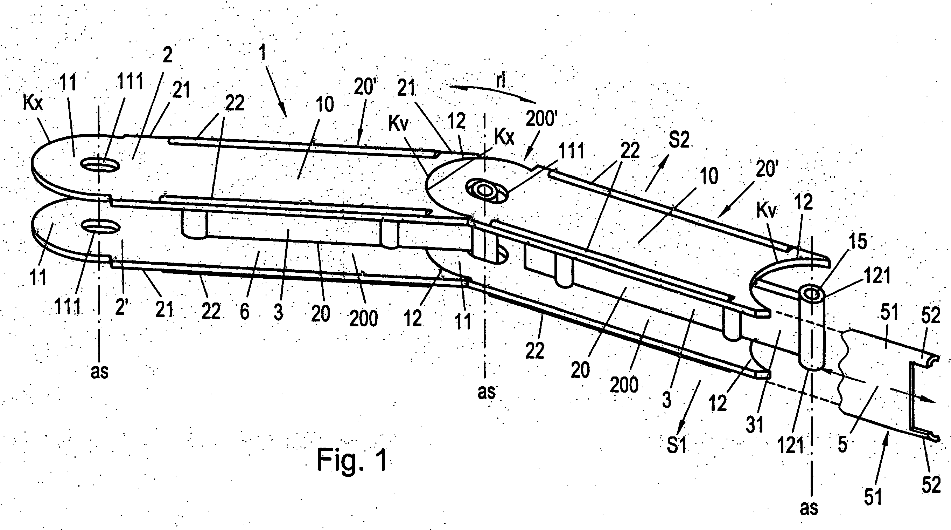

Das in der Fig. 1 im Grundsatz gezeigte Teilstück eines erfindungsgemäßen Kabelkanals 1 umfasst zwei zueinander identische und um eine gemeinsame, senkrecht zur Längserstredcungs-Richtung rl ausgerichtete Schwenkachse as, winkel-verschwenkbare modulartige, längliche - hier noch nicht wie erfindungsgemäß vorgesehen längs-geteilte Stege aufweisende - Kabelkanal-Gliedelemente 10 mit einer oberen und einer unteren Deckplatte 2, 2', welche zueinander parallel und im Abstand voneinander angeordnet sind, wobei sich zwischen diesen beiden Deckplatten 2, 2' längsmittig ein dieselben miteinander verbindender Steg 3 befindet

Die beiden Deckplatten 2, 2' der Gliedelemente 10 sind jeweils beide - hier linksseitig - mit einem kreisbogen-förmige Konvexkontur Kx aufweisenden Schwenk-Fortsatz 11 mit in dessen Kreisbogen-Mittelpunkt angeordneter Schwenkachs-Ausnehmung 111 ausgebildet. Rechts-seitig weisen beide Deckplatten 2, 2' eine Schwenk-Ausnehmung 12 auf, in welche der Steg-Fortsatz 31 des oben genannten, die Deckplatten 2, 2' miteinander verbindenden, Steges 3 hineinragt. Derselbe weist letztlich an der Stelle des Mittelpunktes der die Kreisbogen-Konkavkontur Kv aufweisenden Schwenkausnehmung 12 eine Art säulenartige Verdickung mit einem den genannten Steg-Fortsatz 31 nach oben und nach unten hin im Wesentlichen im Ausmaß der Materialdicke der Deckplatten 2, 2' überragenden Schwenkachs-Stummel 121 auf. Dieser Schwenkachs-Stummel 121 und die denselben tragende, nicht näher bezeichnete, hier etwa säulenartige, Verdickung des Steg-Fortsatzes 31 sind Insgesamt von einer durchgehenden Öffnung 15 durchsetzt, welche zur Aufnahme von dieselbe durchsetzenden Befestigungsmitteln, also insbesondere Schrauben od. dgl., für die Montage des Kabelkanals 1 z. B. an der Decke eines Abwasserkanals dienen. Die beiden Schwenkachs-Stummel 121 jedes der Kabelkanal-Gliedelemente 10 ragt jeweils in die entsprechende Schwenkachs-Ausnehmung 111 der Schwenk-Fortsätze 11 der beiden Deckplatten 2, 2' des jeweils benachbarten Kabelkanal-Gliedelementes 10 des Kabelkanal-Stranges 1 und bilden eine Deckplatten-Schwenkverbindung.

In der Darstellung der Fig. 1 ist beim rechten Gliedelement 10 angedeutet, dass die Achsausnehmung 111 als längs gerichtetes Langloch ausgebildet sein kann, wodurch eine Verbiegung bzw. Auf- bzw. Ab-Krümmung des mit den aneinander gereihten Gliedelementen 10 gebildeten Kabelkanals 1 in "Vertikalrichtung" zur Anpassung an den entsprechenden auf- oder ab-gekrümmten Verlauf der Abwasserkanal-Decke ermöglicht ist.

Die Konvexkontur Kx der kreisbogenförmigen Fortsätze 11 der beiden Deckplatten 2, 2' des in der Fig. 1 rechts angeordneten Kabelkanal-Gliedelementes 10 entspricht im Wesentlichen drehgleit-passend der Konkavkontur Kv der Schwenkachs-Ausnehmungen 12 der Deckplatten 2, 2' des links anschließenden Kabelkanal-Gliedelementes 10. Beidseitig des Mittel-Steges 3 entstehen in jedem der Kabelkanal-Gliedelemente 10 zwischen den beiden Deckplatten 2, 2' jeweils nach beiden Seiten S1, S2 hin offene Räume 20, 20'.

Durch den Zusammenschluss mehrerer Gliedelemente 10 zum Kabelkanal 1 sind letztlich zwei, alle diese Gliedelemente 10 "überbrückende", kontinuierlich durchgehende Längsräume 200, 200' geschaffen, in welche insbesondere nach deren Schließung nach den beiden Seiten S1, S2 hin die zu verlegenden Kabel 6 bzw. Kabelstränge eingezogen werden können und dort letztlich Aufnahme finden.

Nach den beiden Seiten S1, S2 hin geschlossen werden die Räume 20, 20' der Kabelkanal-Gliedelemente 10 letztlich mittels des in der Fig. 1 nur als kurzes Stück angedeuteten, durchgehenden, kontinuierlichen Flanken-Deckband 5 aus einem biegeflexiblen Kunststoffmaterial, das an seinen beiden Längsrändern 51 mit nut/federartigen Formschlusselementen 52 versehen ist. Diese Formschlusselemente 52 umgreifen die entsprechende Gegen-Formschlusselemente 22 an den Längsrändern 21 der beiden Deckplatten 2, 2' jedes der Kabelkanal-Gliedelemente 10 bzw. greifen in dieselben feder/nutartig ein. Damit ist eine nicht nur formschlüssige, sondern auch kraftschlüssige Verbindung zwischen den kontinuierlichen, den Kabelkanal 1 jeweils beidseitig schließenden Flanken-Deckbändern 5 und den Deckplatten 2, 2', sondern auch der Zusammenhalt der Gliedelemente 10 gewährleistet, was insbesondere dann von Wichtigkeit ist, wenn die Gliedelemente 10, wie nachfolgend näher beschrieben werden wird, "zweiteilig", insbesondere mit z. B. längsmittig geteilten und miteinander jeweils zu einem ganzen Gliedelement 10 vereinigten Kabelkanal-Halbgliedelementen 100, 100' gebildet sind.

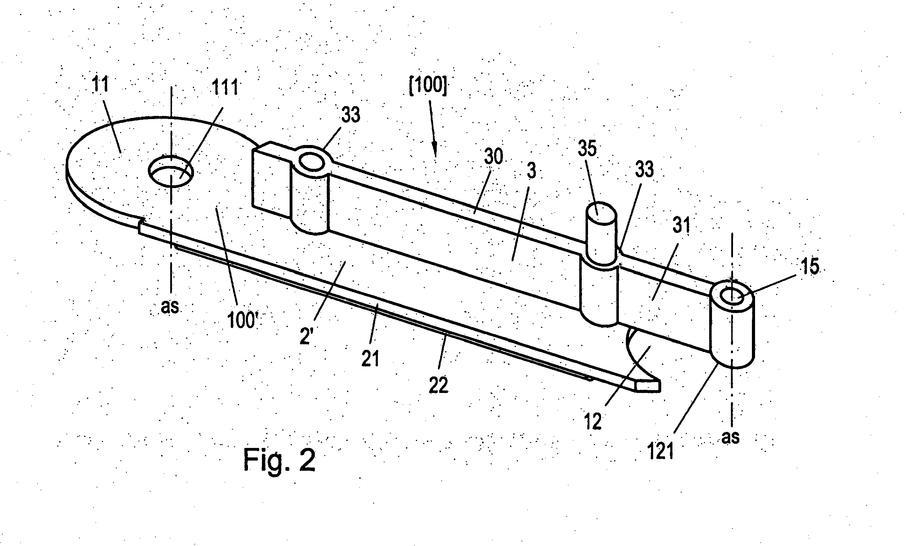

Die Fig. 2 zeigt - bei sonst gleichbleibenden Bezugszeichenbedeutungen - ein "unteres", wie gerade vorher erwähntes Kabelkanal-Halbgliedelement 100'. Es hat an sich den gleichen Aufbau wie das Kabelkanal-Gliedelementes 10, gemäß Fig. 1, jedoch nach längsmittiger Teilung des Steges 3 und ist eben nur mit der "unteren" Deckplatte 2' und dem mit ihr verbundenen längsmittig halbierten Steg 3, also mit dem "Halbsteg" 30, gebildet.

Angedeutet sind dort zwei im Verlauf des Steges voneinander beabstandet angeordnete säulenartige Verdickungen 33 mit zentraler Ausnehmung, in deren einer Steckstift, -zapfen 35 od. dgl., angeordnet ist, welcher zur Verbindung des Halbgliedelements 100' mit einem zweiten - nicht gezeigten - "oberen" Kabelkanal-Halbgliedelement [100] vorgesehen ist. Dieses - hier nicht gezeigte - Kabelkanal-Halbgliedelement [100] ist mit dem hier gezeigten unteren Halbgliedelement 100' identisch ausgebildet und zu demselben symmetrisch, bezogen auf die längsmittige Schnittebene des Steges 3 angeordnet, und die beiden Halbgliedelemente 100' [100] sind mittels der Steckstifte 35 miteinander verbunden.

Ein wesentlicher Vorteil des hier gezeigten "geteilten" Baus der Kabelkanal-Gliedelemente 10 des erfindungsgemäßen Kabelkanals 1 besteht darin, dass an sich lauter gleichartige Halbgliedelemente 100' [100] zur Verfügung stehen und deren Zusammenbau zu den Kabelkanal-Gliedelementen 10 und letztlich zum kontinuierlichen, mit denselben gebildeten Kabelkanal 1 wesentlich erleichtert ist.

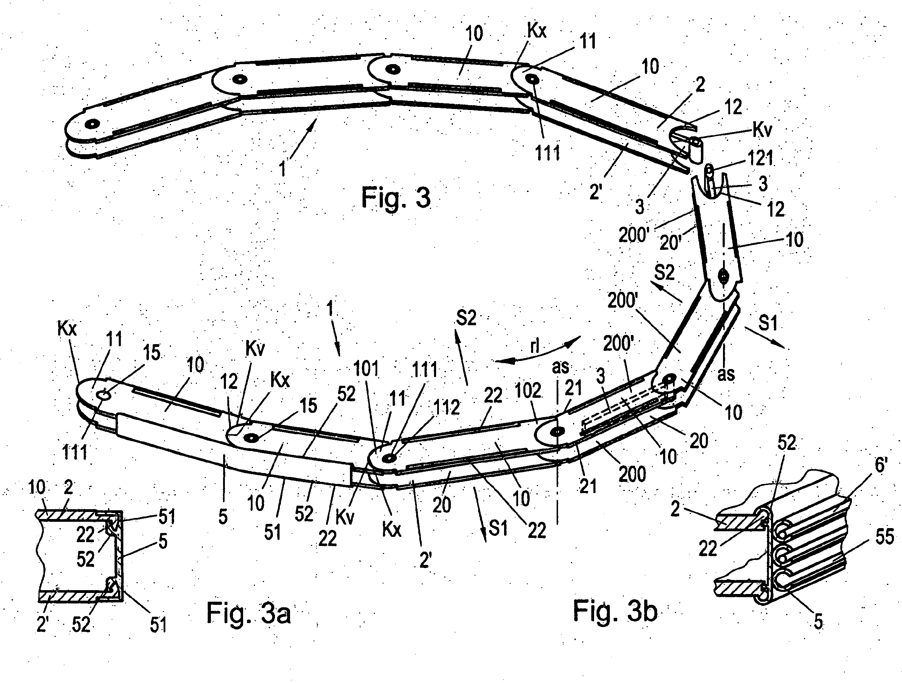

Die Fig. 3 illustriert - bei ansonsten gleichbleibenden Bezugszeichenbedeutungen - anhand von zwei jeweils mehrere Kabelkanal-Gliedelemente 10 umfassenden Teilstücken des neuen Kabelkanals 1 die Erfindung noch näher:

Es ist dort ein Teilstück des aus mehreren Gliedelementen 10 zusammengesetzten Kabelkanals 1 mit seitlichen Flanken-Deckband 5 gezeigt, das den zur vorderen Seite S1 hin offenen Kabel-Aufnahmeraum 20 eines der Kabelkanal-Gliedelemente 10 abdeckt und mit seinen Formschlusselementen 52 - in die Gegen-Formschlusselemente 22 der beiden Deckplatten 2, 2' eingreifend - mit denselben form- und kraftschlüssig kooperiert. In der Fig. 3 scheinen noch die Bezugszeichen 101 und 102 auf, welche die beiden "Enden" des dort dritten Gliedelements 10 bezeichnen.

Die Schnittansicht der Fig. 3a zeigt dies - bei sonst gleichbleibenden Bezugszeichen-Bedeutungen - näher im Detail.

Die Fig. 3b eine Schrägansicht eines Teilstückes eines mit einem - hier drei für die umklammernde Halterung von Zweig-Kabeln 6' ausgebildete Rinnen bzw. Nuten 55 aufweisenden Kabeltrageprofilen ausgebildeten Flanken-Deckbandes 5. In denselben können z. B. aus dem Kabelkanal 1 durch entsprechende Öffnungen im Flanken-Deckband 5 herausgeführte Zweigkabel 6', untergebracht werden, die z. B. letztendlich in einen zu einem Hausanschluss od. dgl. führenden Zweigschacht geführt werden können, eingelegt sein und z. B. durch flexibles Einschnappen in der jeweiligen Rinne 55 fixiert sein. Selbstverständlich können in den Profilrinnen 55 des Flanken-Deckbandes 5 auch den Kabelkanal 1 über längere Strecken hin begleitende, zusätzliche "sonstige" Kabel, Leitungen od. dgl. geführt sein.

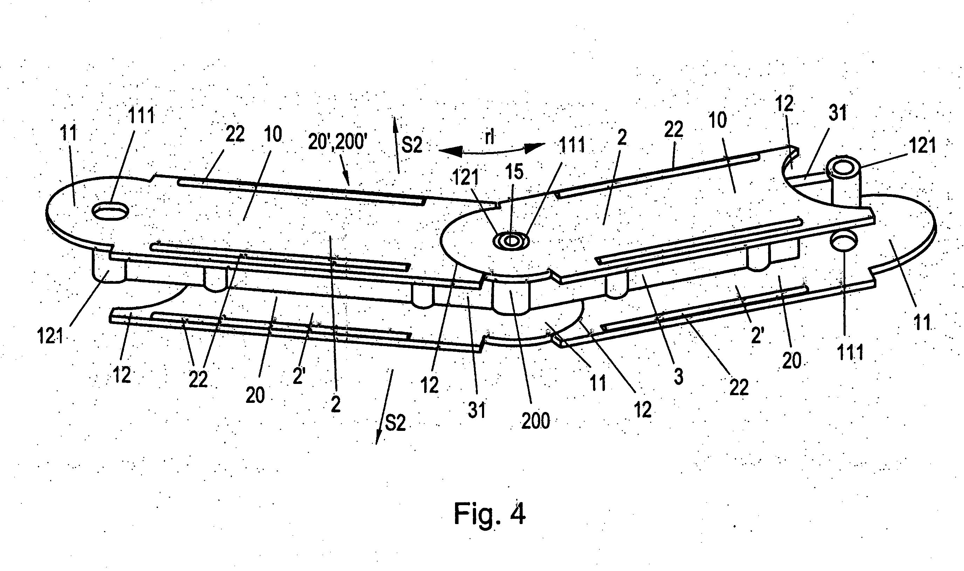

Die Fig. 4 dient - bei sonst gleichbleibenden Bezugszeichenbedeutungen - dem zur Darstellung des Erfindungsgegenstandes in einer Ausführungsform mit "zentrisch symmetrisch" ausgebildeten Kabelkanal-Gliedelementen 10, bei welchen die jeweils miteinander drehgleitbar kooperierenden Schwenk-Fortsätze 11 und Schwenk-Ausnehmungen 12 der Deckplatten 2, 2' abwechselnd bzw. diametral zueinander an jeweils verschiedenen Enden der Kabelkanal-Gliedelemente 10 angeordnet sind. Für die derartig ausgebildeten Gliedelemente 10 lassen sich besonders vorteilhaft die in den Fig. , 2 gezeigten Halb-Gliedelemente 100, 100' die nur richtungsmäßig diametral anzuordnenden und miteinander zu vereinigen sind.

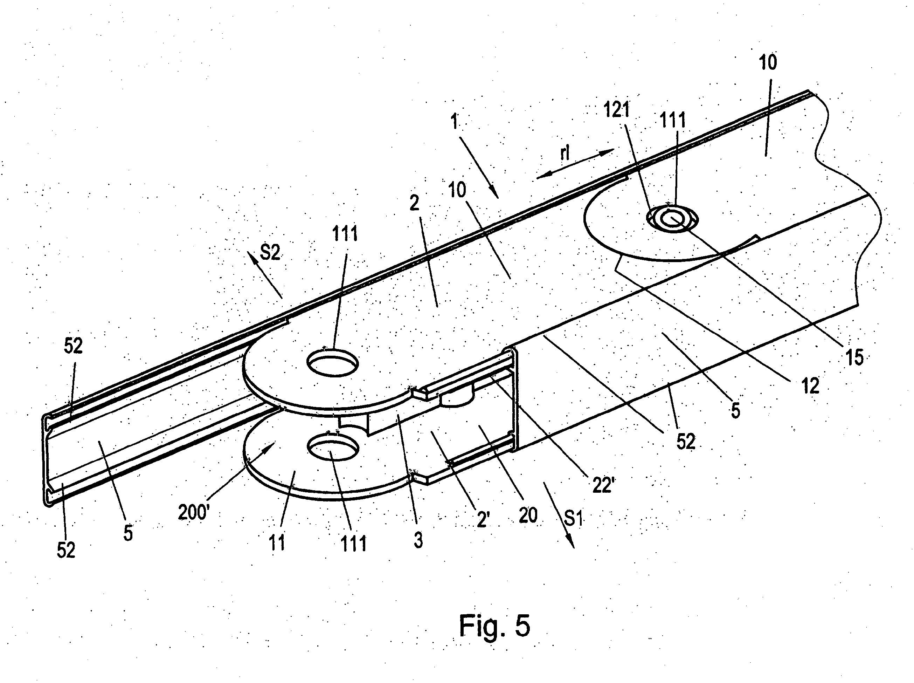

Schließlich zeigt die Fig. 5 - bei sonst gleichbleibenden Bezugszeichenbedeutungen - einen erfindungsgemäßen Kabelkanal 1 mit den auf dessen Gliedelemente 10 beidseitig aufgezogenen kontinuierlichen Flanken-Deckbändern 5.

Was das Einbringen des neuen Kabelkanals über einen Vertikal-Zweigschacht in das bzw. den für die Kabelverlegung vorgesehene(n) Rohr bzw. Kanal betrifft, so werden im Bereich der Schachtöffnung die Gliedelemente zum neuen Kabelkanal zusammengesetzt und kontinuierlich so vertikal abwärts geführt, dass die Schwenkachsen der Gliedelemente im Wesentlichen waagrecht angeordnet sind, sodass - bevorzugt unter Einsatz eines den Übergang vom Zweigschacht in den Kanal überbrückenden Umlenk-Führungsblechs od. dgl. der Kabelkanal unter Verschwenkung der Gliedelemente problemlos von der Vertikalen in die Horizontale gebracht werden kann. Dann kann z. B. die Befestigung an einer Rohr- bzw. Kanal-Seitenwand erfolgen. Soll eine Montage an der Kanaldecke erfolgen, so kann z. B. schon im Zuge des Einziehens nach Erreichen des "horizontalen" Kanals laufend eine Verdrehung des Kabelkanals in der Weise erfolgen, dass die Schwenkachsen zwischen den Gliedelementen im Wesentlichen senkrecht orientiert sind und durch die "hohlen" Achsen die Decken-Befestigungsmittel eingebracht werden können.

## Patentansprüche

1. Kabelkanal für entlang von Wänden, Wandungen und Decken von unterirdisch, im Wesentlichen horizontal, schräg ansteigend oder abfallend und/oder kurvig bzw. mit Krümmungen verlaufenden, für die Führung von Wasser oder Abwässern benutzten Rohren, Gewölben, Tunnels, Kanälen oder Schächten - zu verlegende Kabel bzw. Kabelstränge für Energie- und Stromtransport, Telefonie, Daten- und Informations-Transfer sowie für Glasfaser- und Lichtleiter-Kabel bzw. -Kabelstränge, welcher Kabelkanal von der Oberfläche aus jeweils durch im Wesentlichen vertikale oder schräge Zugangs- bzw. Zweigschächte in das genannte Rohr oder Gewölbe einbringbar bzw. einziehbar und an dessen Wand, Wandung und Decke befestigbar ist,
- wobei der Kabelkanal (1) - nach Art einer Fahrrad-Antriebskette - mit in Längserstreckungsrichtung (rl) hintereinander gereiht angeordneten, jeweils über ihre beiden Endzonen um eine zur Längserstreckungs-Richtung (rl) senkrechte Schwenkachse (as) gegenseitig seitlich winkel-verschwenkbar miteinander verbundenen, in Formgebung und Dimension einander gleichenden, länglichen Kabelkanal-Gliedelementen (10) gebildet ist,
- wobei jedes der Kabelkanal-Gliedelemente (10) mit zwei mittels mindestens einem, längs-mittig angeordneten - Steg (3) voneinander beabstandet und zueinander parallel gehaltenen und miteinander verbundenen Deckplatten (2, 2') gebildet ist und die beidseitig des genannten Steges (3) zwischen den Deckplatten (2, 2') angeordneten, für die spätere Aufnahme der Kabel (6) bzw. Kabelstränge vorhergesehenen, zuerst nach beiden Seiten (S1, S2) hin seitlich offenen Räume (20, 20') mittels beidseitig angeordneten bzw. anordenbaren, kontinuierlich durchlaufenden, mit entsprechenden Formschluss- bzw. Gegen-Formschlusselementen (52) an ihren Längsrändern (51) ausgestatteten, mit entsprechenden Gegen-Formschluss- bzw. Formschlusselementen (22) an den Längsrändern (21) der Deckplatten (2, 2') der Kabelkanal-Gliedelemente (10) form- und kraftschluss-kooperierbar ausgebildeten, außenseitig glatte Oberfläche aufweisenden, Flanken-Deckbändern (51) oder aber -Deckprofilbändern (55) aus einem nur reduziert biegeflexiblen Material beidseitig seitlich abschließbar bzw. abgeschlossen sind,
- wodurch jeweils zwei durch die Stege (3) jedes der Kabelkanal-Gliedelemente (10) voneinander getrennte - den mit den fahrradketten-artig aneinander geschlossenen, gegenseitig seitlich winkel-verschwenkbaren Kabelkanal-Gliedelementen (10) gebildeten Kabelkanal (1) durchgehend durchziehende - rundum im Wesentlichen geschlossene, kontinuierliche Längsräume (200, 200') für das Einziehen und die Aufnahme der genannten Kabel bzw. Kabelstränge (6) ausgebildet sind,
- wobei jede der Deckplatten (2, 2') der Kabelkanal-Gliedelemente (10) an einem Ende des Kabelkanal-Gliedelements (10) mit einem eine Kreisbogen-Konvexkontur (Kx) mit mittiger Achs-Ausnehmung (111) aufweisenden Schwenk-Fortsatz (11) und am anderen Ende mit einer - eine der genannten Kreisbogen-Konvexkontur (Kx) entsprechende Kreisbogen-Konkavkontur (Kv) aufweisenden - Schwenk-Ausnehmung (12) ausgebildet ist, **dadurch gekennzeichnet,**
**dass** in dieselben bis in den Bereich von deren Kreisbogen-Mittelpunkt hineinragend der Steg (3) bzw. dessen Steg-Fortsatz (31) mit von demselben zumindest nach einer Seite hin bzw. nach aufwärts und/oder abwärts sich erhebenden bzw. ragenden Schwenkachs-Stummel (121) ausgebildet ist, wobei derselbe eine der Innenkontur der Achsausnehmung (111) am Schwenk-Fortsatz (11) der Deckplatten (2, 2') entsprechende Außenkontur aufweist,
- **dass** die Kabelkanal-Gliedelemente (10) jeweils über deren Achs-Ausnehmung (111) mit dem Schwenkachs-Stummel (121) eines der Kabelkanal-Gliedelemente (10) mit dem mit seiner Schwenkachs-Ausnehmung (111) den genannten Achsstummel (121) dieses Gliedelements (10) drehgleitbar umgreifenden Schwenk-Fortsatz (11) der Deckplatte (2, 2') des jeweils benachbarten Kabelkanal-Gliedelements (10) seitlich winkel-verschwenkbar miteinander verbunden sind,
- **dass** weiters jedes der Kabelkanal-Gliedelemente (10) zweistückig mit zwei identischen Gliedelement-Hälften bzw. Kabelkanal-Halbgliedelementen (100, 100') mit jeweils einer der Deckplatten (2, 2') und einem durch Längs-Halbierungsteilung des Stegs (3) gebildetem Halbsteg (30) ausgebildet ist, und
- **dass** die beiden Gliedelement-Hälften bzw. Halb-Gliedelemente (100, 100') mittels, beispielsweise stift- bzw. zapfenartigen, Steck-Verbindungselementen (35) - unter Vereinigung von deren Halbstegen (30) zum Steg (3) - miteinander zum Kabelkanal-Gliedelement (10) verbind- und vereinigbar sind.

2. Kabelkanal nach Anspruch 1, **dadurch gekennzeichnet, dass** jedes der denselben bildenden Gliedelemente (10) mit Deckplatten (2, 2') und Halbstegen (30) ausgebildet ist, wobei bei deren einer Deckplatte (2) der Schwenk-Fortsatz (11) mit der Achs-Ausnehmung (111) nach einer Seite und die Schwenk-Ausnehmung (12) und der Steg-Fortsatz (31) mit dem Schwenk-Achsstummel (121) nach der anderen Seite hin ausgerichtet sind und bei deren anderer Deckplatte (2') der Schwenk-Fortsatz (11) mit der Schwenkachs-Ausnehmung (111) sowie die Schwenk-Ausnehmung (111) und der Steg-Fortsatz (31) mit dem Schwenkachs-Stummel (121) nach der jeweils "gegenteiligen" bzw. "diametralen" Seiten hin ausgerichtet sind.

3. Kabelkanal nach Anspruch 1 oder 2, **dadurch gekennzeichnet, dass** der bzw. die Schwenkachs-Stummel (121) des Steg-Fortsatzes (31) und der Steg-Fortsatz (31) selbst mit einer durchgehenden Öffnung (15), für die Einbringung von Befestigungselementen, wie z. B. Verankerungsschrauben, für die Montage des Kabelkanals (1) an der Wand, Wandung und insbesondere an der Decke eines Wasser- bzw. Abwasserführungs-Rohrs, -Kanals od. dgl. ausgebildet sind.

4. Kabelkanal nach einem der Ansprüche 1 bis 3, **dadurch gekennzeichnet,**
**dass** - zur Ermöglichung eines in Vertikal-Richtung (flach) gekrümmten Verlaufs oder eines "Torsions"-Verlaufes desselben die Achs-Ausnehmungen (111) der Deckplatten-Schwenk-Fortsätze (11) mit einer einen Toleranz-Abstand bzw. -Spielraum gegenüber der Außenkontur der Schwenkachs-Stummel (121) aufweisenden Innenkontur oder zumindest als in Längsrichtung (rl) ausgerichtete Langlöcher ausgebildet sind.

5. Kabelkanal nach einem der Ansprüche 1 bis 4, **dadurch gekennzeichnet,**
**dass** die Kabelkanal-Gliedelement-Hälften bzw. -Halb-Gliedelemente (100, 100') aus einem relativ geringe Biegeflexibilität aufweisenden, gegenüber in Abwässern vorhandenen Substanzen langzeit-stabilen, inerten, gegebenenfalls faserverstärkten, Kunststoff, vorzugsweise auf Basis von Polycarbonat, Polyamid, Polypropylen, Polyvinylchlorid, Polyurethan od. dgl. und die Flanken-Deckbänder bzw. -Deckprofile (5, 55) aus einem ebenfalls langzeit-stabilen, inerten Kunststoff, vorzugsweise auf Basis von Polyvinylchlorid, Polyamid, Polypropylen, PVC od. dgl. gebildet sind.

6. Kabelkanal nach einem der Ansprüche 1 bis 5, **dadurch gekennzeichnet, dass** zumindest eines der kontinuierlichen Flanken-Deckbänder (5) oder aber beide Flanken-Deckbänder (5) außenseitig mit einem Profil (55) mit zumindest einer durchgehenden, kontinuierlichen Nut, Rinne od. dgl. für die Aufnahme, Führung und Halterung von weiteren Kabeln, Leitungen od. dgl. und/oder von aus dem Kabelkanal (1) herausgeführten und beispielsweise letztlich durch einen Zweig- bzw. Abzweigungsschacht od. dgl. zu einem Hausanschluss zu führenden Zweig-Kabeln (6') ausgebildet ist oder sind.

## Claims

1. A cable duct for cables and/or cable harnesses for energy and electricity transport, telephony, data and information transfer as well as fiber-optic and optical-fiber cables and/or cable harnesses along walls and ceilings of subsurface tubes, vaults, tunnels, ducts, or wells, that are substantially horizontal, ascending or sloping and/or serpentine and/or having curvatures and used for guiding water or waste waters, which cable duct can be introduced and/or pulled into said tube or vault from the surface by access and/or branched wells that are substantially vertical or inclined, and can be attached to its wall and ceiling,
the cable duct (1) - like a bicycle drive chain - being formed with elongate cable duct link members (10) arranged consecutively in longitudinal extension direction (rl), each connected to one another via their two end zones in a manner laterally pivotable around a pivot axle (as) perpendicular to said longitudinal extension direction (rl), and mutually equal in design and dimension,
each of the cable duct link members (10) being formed with two cover panels (2, 2') spaced apart, and kept in parallel and connected with each other, by at least one web (3) centrally arranged in a longitudinal direction and the spaces (20, 20') that are first laterally open towards both sides (S1, S2) arranged between the cover panels (2, 2'), intended for the subsequent reception of the cables (6) and/or cable harnesses being mutually sealable, and/or sealed on both sides using flank cover straps (51), or flank cover profile straps (55) made of a material with reduced bending flexibility, which are arranged and/or arrangeable to run continuously on both sides, having corresponding tight-fit and counter-tight-fit elements (52) at their longitudinal edges (51), formed with corresponding counter-tight-fit and tight-fit elements (52), respectively, at the longitudinal edges (21) of the cover panels (2, 2') of the cable duct link members (10) in a tight- and force-fit cooperative manner, and having a smooth surface at the outside,
whereby any two, essentially all-round closed, continuous longitudinal spaces (200, 200') separated by the webs (3) of each of the cable duct link members (10) continuously pervading the cable duct (1) formed with the cable duct link members (10) connected to each other in said bicycle-chain-like manner and laterally pivotable with respect to each other, are formed for pulling in and receiving said cables and/or cable harnesses (6),
each of the cover panels (2, 2') of the cable duct link members (10) being formed with a pivoting extension (11) with a circular convex outline (Kx) having a central axle recess (111) on one end of the cable duct member (10) and with a pivoting recess (12) having a circular concave outline (Kv) corresponding to said arc convex outline (Kx) on the other end, **characterized in that**,
in the same, protruding into the area of their arc center, the web (3) and/or its web extension (31) is formed with a pivot-axle journal (121) raising and/or protruding sideways as well as upwards and/or downwards, the same having an exterior outline corresponding to the interior outline of the axle recess (111) at the pivot extension (11) of the cover panels (2, 2'),
**in that** the cable duct link members (10) are connected with each other, via their axle recess (111) with the pivot-axle journal (121) of one of the cable duct link members (10), with the pivoting extension (11) of the cover panel (2, 2') of the respective adjacent cable duct element (10), surrounding said axle journal (121) of said member (10) in a rotatably sliding manner, in a laterally pivotable manner,
**in that** further each of the cable duct link members (10) is formed in a two-piece manner with two identical link member halves and/or cable duct link half members (100, 100') each having one of the cover panels (2, 2') and one half web (30) formed by halving the web (3) in a longitudinal direction, and
**in that** the two link member halves, or link half members (100, 100'), are connectable and combinable to become a cable duct member (10) using, for example, pin- or journal-like plug-in elements (35) by combining their half webs (30) to become a web (3).

2. The cable duct of Claim 1, **characterized in that** each of the link members (10) forming the same is formed with cover panels (2, 2') and half webs (30), in one of said cover panels (2), the pivoting extension (11) with the axle recess (111) being oriented towards one side and the pivoting recess (12) and the web extension (31) with the pivot-axle journal (121) being oriented towards the other side, while in the other of said cover panels (2'), the pivoting extension (11) with the axle recess (111) as well as the pivoting recess (12) and the web extension (31) with the pivot-axle journal (121) being oriented towards the respective "opposite" and/or "diametrically opposed" sides.

3. The cable duct of Claim 1 or 2, **characterized in that** the pivot-axle journal(s) (121) of the web extension (31) and the web extension (31) itself are formed with a continuous opening (15) for introducing mounting elements, such as anchorage screws, for mounting the cable duct (1) onto the wall, and in particular the ceiling, of a water and/or waste water guide tube, duct, or the like.

4. The cable duct of any one of Claims 1 to 3, **characterized in that**, for allowing a route (flatly) bent in a vertical direction, or a torsion route, of the same, the axle recesses (111) of the cover panel pivoting extensions (11) are formed with an interior outline having a tolerance distance and/or margin with respect to the exterior outline of the interior pivot-axle journal (121), or at least as elongate holes oriented in a longitudinal direction (rl).

5. The cable duct of any one of Claims 1 to 4, **characterized in that** the cable duct link member halves, or half link members (100, 100'), are made of a plastic material with a relatively low bending flexibility that is long-term stable against substances present in waste waters, inert, optionally fiber-reinforced, preferably based on polycarbonate, polyamide, polypropylene, polyvinylchloride, polyurethane, or the like, and **in that** the flank cover straps and/or cover profiles (5, 55) are made of a plastic material that is only stable in the long term, preferably based on polyvinylchloride, polyamide, polypropylene, PVC, or the like.

6. The cable duct of any one of Claims 1 to 5, **characterized in that** at least either of the continuous flank cover straps (5) or both flank cover straps (5) is or are formed with a profile (55) on the outside, having at least one permanent, continuous groove, chase, or the like for receiving, guiding and holding further cables, lines, or the like, and/or branched cables (6') guided out of the cable duct (1) and, for example, ultimately to be guided through a branched, or branched-off well, or the like, to a domestic connection.

## Revendications

1. Passage de câbles destiné à des câbles ou des faisceaux de câble servant au transfert d'énergie et de courant, de téléphonie, de données et d'informations ainsi qu'à des câbles ou faisceaux de câble à fibres optiques et optiques, à poser le long de parois latérales ou supérieures de tubes, voutes, tunnels, canaux ou puits souterrains, essentiellement horizontaux, obliques vers le haut ou vers le bas et/ou courbés ou incurvés, qui servent à transporter de l'eau ou de l'eau usée, le passage de câbles pouvant être inséré ou enfoncé dans le tube ou la voute depuis la surface à partir de puits d'accès ou de déviation, essentiellement verticaux ou obliques, et fixé à la paroi latérale ou supérieure du canal,
le passage (1) de câbles étant formé d'éléments (10) de passage de câbles allongés, identiques par rapport à leur forme et dimension, qui se succèdent dans le sens de leur longueur (rl) - à la manière de la chaîne de transmission d'un vélo - et sont reliés entre eux de façon à pouvoir effectuer un pivotement angulaire latéral respectivement autour d'un axe de pivotement vertical (as), perpendiculaire au sens de leur longueur (rl), chacun des éléments (10) de passage de câbles étant formé par deux plaques de recouvrement (2, 2') espacées et reliées entre elles et maintenues parallèles au moyen d'une membrure médiane (3), les deux espaces (20, 20') situés des deux côtés de la membrure (3) entre les plaques (2, 2') de recouvrement et destinés à recevoir les câbles (6) ou les faisceaux de câbles, d'abord ouverts latéralement des deux côtés (S1, S2), pouvant être refermés ou étant fermés latéralement des deux côtés par des bandes (51) de recouvrement latéral ou des bandes (55) de recouvrement profilé latéral en matière à souplesse limitée, continues, ayant une surface lisse à l'extérieur, qui sont ou peuvent être mises en place des deux côtés, et comportent des éléments (52) de liaison par forme au niveau de leurs bords (51) longitudinaux, qui peuvent coopérer par liaison de forme et de force avec des éléments (22) correspondants de liaison par forme, situés au niveau des bords (21) longitudinaux des plaques (2, 2') de recouvrement des éléments (10) de passage de câble,
ce qui permet la formation de deux cavités longitudinales continues (200, 200') essentiellement fermées, séparées par les membrures (3) de chacun des éléments (10) de passage de câbles, et traversant en continu le passage de câbles (1) formé par les éléments (10) de passage de câbles qui sont reliés entre eux à la manière de la chaîne de transmission d'un vélo et peuvent effectuer un pivotement angulaire, pour insérer et loger les câbles ou faisceaux (6) de câbles,
chacune des plaques (2, 2') de recouvrement des éléments (10) de passage de câbles étant formée, d'un côté de l'élément (10) de passage de câble, avec une extension (11) à pivotement qui présente un profil convexe (Kx) en arc de cercle avec un évidement (111) axial central, et, de l'autre côté, avec un évidement (12) de pivotement qui présente un profil concave (Kv) en arc de cercle correspondant au profil convexe (Kx) en arc de cercle,
en ce que la membrure (3) ou l'extension (31) de membrure, se projetant à l'intérieur de celles-ci jusqu'à leur zone du centre de l'arc de cercle, est formée avec un embout (121) à axe à pivotement, qui s'enlève ou se projette depuis celle-ci au moins dans un sens ou vers le haut et/ou vers le bas, l'embout présentant un profil extérieur correspondant au profil intérieur de l'évidement (111) axial au niveau de l'extension (11) à pivotement des plaques (2, 2') de recouvrement,
en ce que les éléments (10) de passage de câbles sont reliés entre eux à travers leur évidement (111) axial et moyennant l'embout (121) à axe à pivotement d'un des éléments (10) de passage de câbles, avec l'extension (11) à pivotement de la plaque (2, 2') de recouvrement de l'élément (10) de passage de câbles à côté, qui enveloppe l'embout (121) axial de cet élément (10) avec son évidement (111) à axe à pivotement, de façon à pouvoir effectuer un pivotement angulaire,
en ce que chacun des éléments (10) de passage de câbles est composé de deux pièces avec deux moitiés d'éléments de passage de câbles ou demi-éléments (100, 100') de passage de câbles avec au moins une des plaques (2, 2') de recouvrement et une demi-membrure (30) formée par partage en deux longitudinal de la membrure (3), et
en ce que les deux moitiés d'éléments de passage de câbles ou demi-éléments (100, 100') de passage de câbles peuvent être reliées ou unies entre elles moyennant des éléments (35) de raccordement à enfichage, par exemple en forme de tige ou de pivot, en raccordant leurs demi-membrures (30) pour obtenir une membrure (3).

2. Passage de câbles selon la revendication 1, **caractérisé en ce que** chacun des éléments (10) formant celui-ci est formé avec des plaques (2, 2') de recouvrement et des demi-membrures (30), chez l'une des plaques (2) de recouvrement l'extension (11) à pivotement avec l'évidement (111) axial étant orienté vers un côté et l'évidement (12) de pivotement et l'extension (31) de membrure étant orientés vers l'autre côté, et chez l'autre plaques (2') l'extension (11) à pivotement avec l'évidement (111) axial ainsi que avec l'évidement (111) axial et l'extension (31) de membrure avec l'embout (121) à axe à pivotement étant orientés vers le côté « en face » ou « diamétralement opposé » respectif.

3. Passage de câbles selon la revendication 1 ou 2, **caractérisé en ce que** l'embout (121) à axe à pivotement de l'extension (31) de membrure et l'extension (31) de membrure même sont formés avec une ouverture (15) continue pour l'insertion d'éléments de fixation, par exemple des vis d'encrage, pour monter le passage de câbles sur la parois latérale et en particulier la paroi supérieure d'un tube, un canal ou analogues servant à évacuer de l'eau ou de l'eau usée.

4. Passage de câbles selon une des revendications 1 à 3, **caractérisé en ce que** les évidements (111) axiaux des extensions (11) à pivotement des plaques de recouvrement sont formés avec un profil intérieur comportant une distance ou une marge de tolérance par rapport au profil extérieur de l'embout (121) à axe à pivotement ou au moins en forme de trous élongés orientés en direction (lr) longitudinale, pour permettre au passage de câbles de suivre un parcours faiblement curvé dans le sens vertical ou un parcours de « torsion ».

5. Passage de câbles selon une des revendications 1 à, **caractérisé en ce que** les moitiés d'éléments ou demi-éléments (100, 100') de passage de câbles sont d'une matière synthétique avec une souplesse en flexion relativement faible, stable à long terme à des substances présentes dans des eaux usées, inerte, éventuellement renforcée par des fibres, de préférence à base de polycarbonate, polyamide, polypropylène, polychlorure de vinyle, polyuréthane ou analogues, et **en ce que** les bandes (51) de recouvrement latéral ou les bandes (55) de recouvrement profilé latéral sont d'une matière synthétique, également stable à long terme, inerte, de préférence à base de polychlorure de vinyle, polyamide, polypropylène, PVC ou analogues.

6. Passage de câbles selon une des revendications 1 à 5, **caractérisé en ce que** au moins une des bandes (5) de recouvrement latéral continues ou alors les deux bandes (5) de recouvrement latéral comporte(nt), à l'extérieur, un profil (55) avec au moins une rainure, encoche ou analogues continus et continués, pour loger, guider et tenir en place d'ultérieur(e)s câbles, lignes ou analogues et/ou des câbles (6') de déviation sortant du passage (1) de câbles et à conduire finalement vers un raccordement particulier à travers un puis de déviation ou analogue.
